(19) **Europäisches Patentamt / European Patent Office / Office européen des brevets**

(11) **EP 3 823 155 B1**

(12) # EUROPEAN PATENT SPECIFICATION

(45) Date of publication and mention
of the grant of the patent:
**17.01.2024 Bulletin 2024/03**

(21) Application number: **19833121.7**

(22) Date of filing: **18.01.2019**

(51) International Patent Classification (IPC):
**H02P 6/14** *(2016.01)*       **F02N 11/08** *(2006.01)*
**F02P 7/067** *(2006.01)*      **F02P 7/07** *(2006.01)*
**H02P 9/48** *(2006.01)*       **H02P 6/20** *(2016.01)*
**H02P 6/16** *(2016.01)*       **F02N 19/00** *(2010.01)*
**F02N 11/04** *(2006.01)*

(52) Cooperative Patent Classification (CPC):
**H02P 9/48; F02N 19/005; F02P 7/067; H02P 6/14;
H02P 6/16; H02P 6/20;** F02N 11/04;
F02N 2011/0896; F02N 2019/007; F02P 7/07;
H02P 2209/07; H02P 2209/13

(86) International application number:
**PCT/JP2019/001459**

(87) International publication number:
**WO 2020/012679 (16.01.2020 Gazette 2020/03)**

(54) **DRIVE DEVICE FOR THREE-PHASE ROTATING ELECTRIC MACHINE AND THREE-PHASE ROTATING ELECTRIC MACHINE UNIT**

ANTRIEBSVORRICHTUNG FÜR DREIPHASIGE ROTIERENDE ELEKTRISCHE MASCHINE UND DREIPHASIGE ROTIERENDE ELEKTRISCHE MASCHINENEINHEIT

DISPOSITIF D'ENTRAÎNEMENT POUR MACHINE ÉLECTRIQUE TOURNANTE TRIPHASÉE ET UNITÉ DE MACHINE ÉLECTRIQUE TOURNANTE TRIPHASÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.07.2018 JP 2018131229**

(43) Date of publication of application:
**19.05.2021 Bulletin 2021/20**

(73) Proprietor: **Mitsuba Corporation
Kiryu-shi
Gunma 376-8555 (JP)**

(72) Inventors:
• **MORIMOTO, Noriki
Kiryu-shi, Gunma 376-8555 (JP)**

• **HAGIMURA, Masami
Kiryu-shi, Gunma 376-8555 (JP)**

(74) Representative: **Becker, Eberhard
Becker Kurig & Partner
Patentanwälte mbB
Bavariastraße 7
80336 München (DE)**

(56) References cited:
| | |
|---|---|
| EP-A1- 2 242 173 | EP-A1- 3 147 496 |
| WO-A1-2012/169156 | WO-A1-2014/156865 |
| WO-A1-2014/156865 | WO-A1-2015/076344 |
| WO-A1-2015/083477 | WO-A1-2018/047746 |
| JP-A- H0 847 285 | JP-A- H0 847 285 |
| JP-A- 2014 152 663 | JP-A- 2016 023 559 |
| JP-A- 2017 521 988 | US-A1- 2008 272 762 |

EP 3 823 155 B1

## Description

BACKGROUND

Technical Field

The present invention relates to a drive device for a three-phase rotating electric machine and a three-phase rotating electric machine unit.

Related Art

As a three-phase rotating electric machine mounted on a vehicle, for example, there is a so-called ACG starter motor used as a motor for starting an engine of a vehicle and an electric generator used after the engine is started (see Patent Literature 1 described below).
In Patent Literature 1 described above, three magnetic sensors are used to determine a three-phase energization timing for driving the ACG starter motor.

[Literature of related art]

[Patent literature]

Patent literature 1: Japanese Patent Application Laid-Open No. 2009-89588
EP 2 242 173 A1 discloses a motor drive control device configured to control driving of a brushless DC motor including a stator having drive coils, a rotor having plural magnetic poles, and plural position detecting units that output position detection signals representing position of the rotor with respect to the stator. The motor drive control device includes a drive voltage generating unit configured to generate and output drive voltages to the motor to drive the motor. An abnormality detecting unit can be used to detect abnormality of the position detection signals. When abnormality of at least one of the position detection signals has been detected by the abnormality detecting unit, the motor drive control device can drive the motor based on at least one of the remaining position detection signals excluding the position detection signal that has been detected as abnormal.

SUMMARY

[Problems to be Solved]

However, a magnetic sensor needs to be moulded with a filler for corresponding to a waterproof structure. Therefore, if there are a large number of the magnetic sensors, a cost of the magnetic sensors and the filler will increase. Therefore, the number of the magnetic sensors is expected to be reduced.
The present invention is provided by the appended claims. The following disclosure serves a better understanding of the present invention and is accomplished in view of this situation, and an object of the present invention is to provide a drive device for a three-phase rotating electric machine and a three-phase rotating electric machine unit in which magnetic sensors can be reduced.

[Means to Solve Problems]

An aspect of the present invention is a drive device for a three-phase rotating electric machine which drives a three-phase rotating electric machine mounted on a vehicle, and the drive device includes: a plurality of switching elements which energize three-phase windings of the three-phase rotating electric machine by performing switching operations; and a control part which controls the switching operations of the plurality of switching elements, wherein the control part performs a first control for controlling the switching operations with four energization patterns indicating an ON-state or an OFF-state of the plurality of switching elements, thereby driving the three-phase rotating electric machine.
An aspect of the present invention is the drive device described above, wherein in the first control, the control part uses the four energization patterns to control an energization timing of each of windings of a U-phase, a V-phase, and a W-phase in the three-phase windings.
An aspect of the present invention is the drive device described above, wherein the four energization patterns include a first energization pattern in which the windings of the U-phase, the V-phase, and the W-phase among the three-phase windings are energized, and a second energization pattern in which the windings of the U-phase and the V-phase are energized and the winding of the W-phase is not energized.
An aspect of the present invention is the drive device described above, and the drive device includes two magnetic sensors for detecting magnetic flux of a plurality of magnets having N poles and S poles, wherein the N poles and the S poles are alternately arranged in a circumferential direction of a rotor of the three-phase rotating electric machine; and each of the four energization patterns is determined by a combination of each output of the two magnetic sensors.
An aspect of the present invention is the drive device described above, wherein the control part selects the first energization pattern when logic of each output of the two magnetic sensors is the same, and selects the second energization pattern when the logic of each output of the two magnetic sensors is different.
An aspect of the present invention is the drive device described above, wherein the control part is capable of switching, as control of the switching operations, the first control and a second control which is different from the first control, wherein the second control determines the energization timings of the U-phase and the V-phase and estimates the energization timing of the W-phase based on the outputs of the two magnetic sensors, and thereby the second control makes the plurality of switching elements perform the switching operations with six energization patterns indicating the ON-state or the OFF-state of the plurality of switching elements.

An aspect of the present invention is the drive device described above, wherein the control part executes the first control for a specified time when the three-phase rotating electric machine is started to rotate the three-phase rotating electric machine forward, and switches from the first control to the second control after the specified time elapses.

An aspect of the present invention is the drive device described above, wherein the control part includes a rotation number detection part which detects a rotation number of the three-phase rotating electric machine after the first control is begun, and switches from the first control to the second control when the rotation number detected by the rotation number detection part reaches a specified value.

An aspect of the present invention is the drive device described above, wherein the control part includes a rotation speed detection part which detects a rotation speed of the three-phase rotating electric machine after the first control is begun, and switches the first control to the second control when the rotation speed detected by the rotation speed detection part reaches a specified value.

An aspect of the present invention is the drive device described above, wherein the control part executes the first control when the three-phase rotating electric machine is rotated reversely from a stopped state, and executes the second control when the three-phase rotating electric machine is rotated forward from the stopped state.

An aspect of the present invention is the drive device described above, wherein the control part executes the first control when the three-phase rotating electric machine is rotated reversely or forward from the stopped state, and switches from the first control to the second control when a crankshaft of an internal combustion engine connected to the three-phase rotating electric machine exceeds a compression top dead center.

An aspect of the present invention is a three-phase rotating electric machine unit including a three-phase rotating electric machine mounted on a vehicle, and a drive device for driving the three-phase rotating electric machine, wherein the three-phase rotating electric machine includes: a stator having a plurality of core teeth, and a plurality of slots in which three-phase windings are wound between the adjacent core teeth; a rotor having a plurality of magnets in which N poles and S poles are magnetized alternately; and a different pole part which is arranged in a magnet among the plurality of magnets and has a magnetic pole different from a magnetic pole of the magnet, and the drive device includes: a first magnetic sensor arranged in a first slot among the plurality of slots; a second magnetic sensor arranged in a second slot which is different from the first slot among the plurality of slots; a third magnetic sensor arranged in the first slot or the second slot and arranged in a position corresponding to the different pole part; and a control part which determines all energization timings for energizing each of windings of a U-phase, a V-phase, and a W-phase based on outputs of the first magnetic sensor and the second magnetic sensor, and identifies an absolute rotation position of the three-phase rotating electric machine based on outputs of the first magnetic sensor, the second magnetic sensor, and the third magnetic sensor.

An aspect of the present invention is the three-phase rotating electric machine unit described above, wherein the third magnetic sensor is arranged in a rotation axis direction of the rotor from the position of the first magnetic sensor or the position of the second magnetic sensor.

[Effect]

As described above, the number of the magnetic sensors can be reduced according to the present invention.

BRIEF DESCRIPTION OF THE DRAWINGS

FIG. 1 is a diagram showing an example of a schematic configuration of a three-phase rotating electric machine unit A according to an embodiment of the present invention.

FIG. 2 is a perspective view of a three-phase rotating electric machine 1 according to the embodiment of the present invention.

FIG. 3 is a plan view of the three-phase rotating electric machine 1 according to the embodiment of the present invention.

FIG. 4 is a diagram in which an inner peripheral side of a rotor 12 according to the embodiment of the present invention is developed to be shown.

FIG. 5 is a diagram showing a functional block according to the embodiment of the present invention.

FIG. 6 is a diagram showing, in a table format, an example of information of four energization patterns #1 to #4 accommodated in a storage part 82 according to the embodiment of the present invention.

FIG. 7 is a timing chart of a start control according to the embodiment of the present invention.

FIG. 8 is a diagram illustrating an example of a normal control according to the embodiment of the present invention.

FIG. 9 is a diagram illustrating a variation example of the normal control according to the embodiment of the present invention.

FIG. 10 is a diagram showing, in a table format, an example of information of energization patterns #'1 to #'6 of the normal control according to the embodiment of the present invention.

FIG. 11 is a plan view of the three-phase rotating electric machine 1 when the rotating electric machine 1 according to the embodiment of the present invention has fourteen poles and twelve slots.

FIG. 12 is a diagram showing an arrangement position of magnetic sensors when the rotating electric machine 1 according to the embodiment of the present invention has the fourteen poles and the twelve slots.

FIG. 13 is a diagram showing an ignition position according to the embodiment of the present invention.

FIG. 14 is a diagram showing conventional energization patterns.

DESCRIPTION OF THE EMBODIMENTS

A three-phase rotating electric machine unit according to an embodiment of the present invention is described below with reference to the drawings.

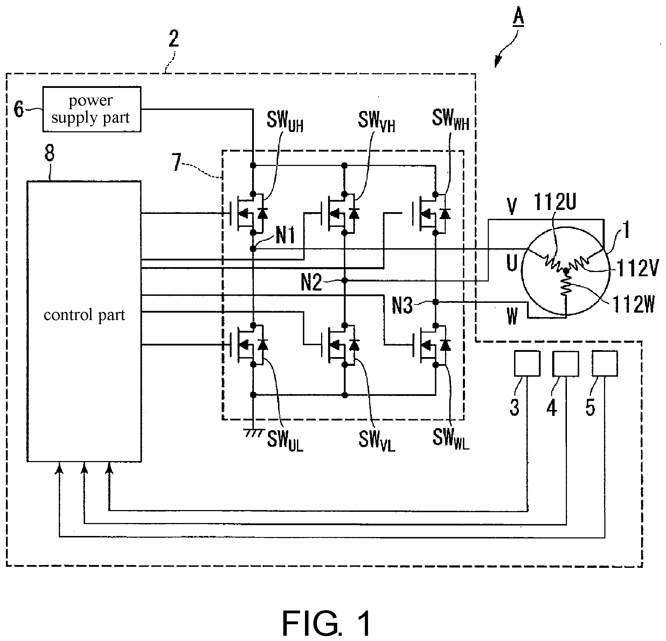

FIG. 1 is a diagram showing an example of a schematic configuration of a three-phase rotating electric machine unit A according to the embodiment of the present invention. As shown in FIG. 1, the three-phase rotating electric machine unit A includes a rotating electric machine of three phases (hereinafter, referred to as "three-phase rotating electric machine") 1 and a drive device 2. The drive device 2 includes a first magnetic sensor 3, a second magnetic sensor 4, a third magnetic sensor 5, a power supply part 6, an inverter 7, and a control part 8.

The three-phase rotating electric machine 1 is mounted on a vehicle, for example, a motorcycle or the like. For example, the three-phase rotating electric machine 1 is a so-called ACG starter motor in which a function of an electric generator including a permanent magnet and a function of a starter motor (an engine starting function) are integrated.

The three-phase rotating electric machine 1 includes a stator 11 fixed to an engine block (not shown) and a rotor 12 fixed to a crankshaft (not shown) of an engine (an internal combustion engine). Moreover, in the following description, a rotation axis direction of the rotor 12 is simply referred to as an axial direction, a radial direction of the stator 11 orthogonal to the rotation axis direction is simply referred to as a radial direction, and a rotation direction of the rotor 12 is simply referred to as a rotation direction or a circumferential direction.

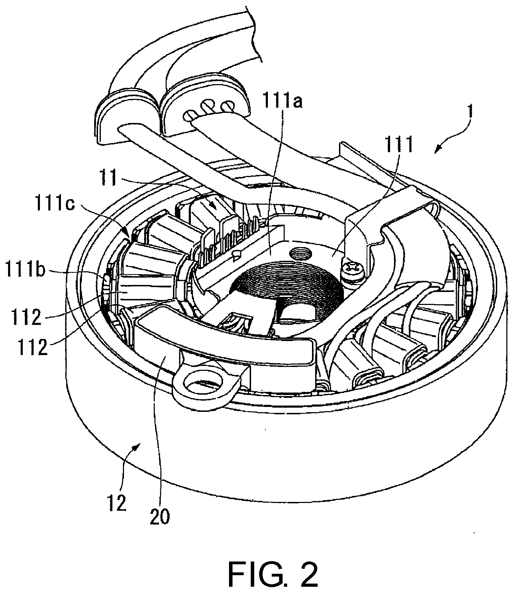

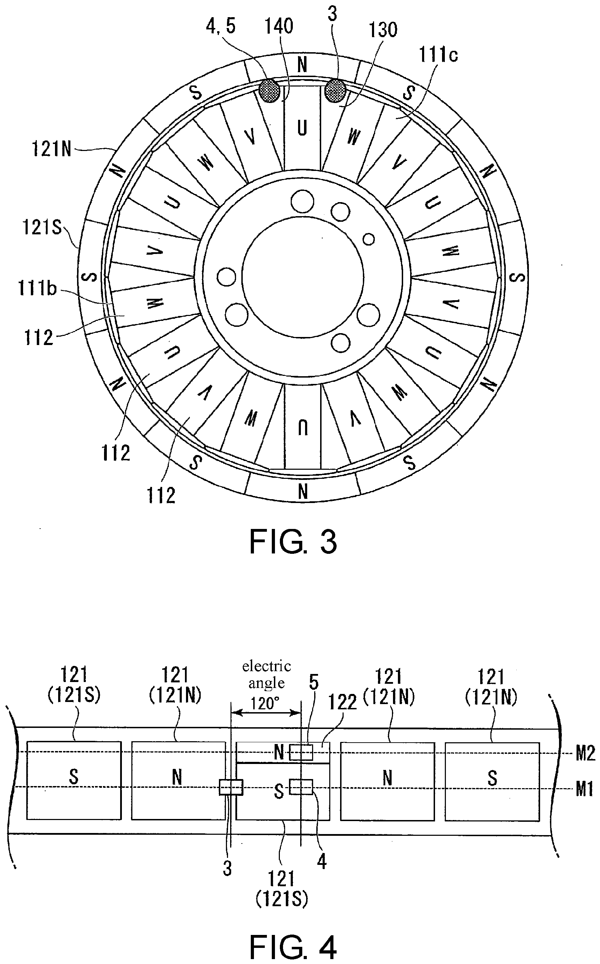

The example of the configuration of the three-phase rotating electric machine 1 according to the embodiment of the present invention is described below with reference to FIGS. 2 to 4. FIG. 2 is a perspective view of the three-phase rotating electric machine 1 according to the embodiment of the present invention. FIG. 3 is a plan view of the three-phase rotating electric machine 1 according to the embodiment of the present invention. FIG. 4 is a diagram in which an inner peripheral side of the rotor 12 according to the embodiment of the present invention is developed to be shown.

(Stator)

The stator 11 includes a stator iron core 111 formed by laminating electromagnetic steel plates, and three-phase windings 112 wound around the stator iron core 111.

The stator iron core 111 has a main body part 111a formed in an annular shape, and a plurality of teeth parts 111b protruding radially outward in a radial fashion from an outer peripheral surface of the main body part 111a. Each teeth part 111b is formed in a substantially T shape in a plan view in the axial direction. Moreover, the teeth part 111b is an example of "core teeth" of the present invention.

In addition, slots 111c are respectively formed between adjacent teeth parts 111b.

Each of the teeth parts 111b is assigned to three-phases (a U-phase, a V-phase, and a W-phase). For example, when the three-phase rotating electric machine 1 has twelve poles and eighteen slots as described in the embodiment, as shown in FIG. 3, the teeth parts 111b are assigned in the circumferential direction in an order of the U-phase, the V-phase, the W-phase, the U-phase, the V-phase, the W-phase, the U-phase, the V-phase, the W-phase, the U-phase, the V-phase, the W-phase, the U-phase, the V-phase, the W-phase, the U-phase, the V-phase, and the W-phase. Moreover, in the following description, teeth parts 111b of the U-phase are referred to as U-phase teeth parts 111U, teeth parts 111b of the V-phase are referred to as V-phase teeth parts 111V, and teeth parts 111b of the W-phase are referred to as W-phase teeth parts 111W.

The three-phase windings 112 are wound around each of the teeth parts 111b. More specifically, a winding of the U-phase (hereinafter, referred to as "the U-phase winding") 112U serving as the three-phase winding 112 is wound around the U-phase teeth part 111U. A winding of the V-phase (hereinafter, referred to as "the V-phase winding") 112V serving as the three-phase winding 112 is wound around the V-phase teeth part 111V. A winding of the W-phase (hereinafter, referred to as "the W-phase winding") 112W serving as the three-phase winding 112 is wound around the W-phase teeth part 111W.

(Rotor)

The rotor 12 is coupled in a manner that the crankshaft (not shown) of the engine can rotate integrally. In addition, on an inner peripheral surface of the rotor 12, a plurality of magnets 121 in which N poles and S poles are magnetized alternately are arranged at equal intervals in the circumferential direction.

More specifically, on the inner peripheral surface of the rotor 12, magnets of the N poles (hereinafter, referred to as "the N pole magnets") 121N and magnets of the S poles (hereinafter, referred to as "the S pole magnets") 121S are alternately attached side by side at equal intervals along the circumferential direction.

Here, the N pole magnet 121N has an entire surface inside the radial direction magnetized to the N pole, and the S pole magnet 121S has an entire surface inside the radial direction magnetized to the S pole. Furthermore, a different pole part 122 is arranged only in a part of an S pole magnet 121S among the plurality of magnets 121. The different pole part 122 is, for example, a magnet magnetized to the N pole, and is used as a target for detecting an ignition timing of the engine. In the embodiment, the different pole part 122 serves as a part of an S pole magnet 121S, and is arranged on an end side of the S pole magnet 121S in the axis direction.

(Magnetic sensor)

The first magnetic sensor 3 is arranged in a first slot 130 among the plurality of slots 111c and detects magnetic flux of the plurality of magnets 121. The first magnetic sensor 3 outputs a detection result to the control part 8 as a first output signal. For example, the first magnetic sensor 3 is a Hall IC.

The second magnetic sensor 4 is arranged in a second slot 140 which is different from the first slot 130 among the plurality of slots 111c, and detects the magnetic flux of the plurality of magnets 121. The second magnetic sensor 4 outputs a detection result to the control part 8 as a second output signal. For example, the second magnetic sensor 4 is a Hall IC.

The third magnetic sensor 5 is arranged in the first slot 130 or the second slot 140, and is arranged in a position corresponding to the different pole part 122. The third magnetic sensor 5 detects the magnetic flux of the different pole part 122 and outputs a detection result to the control part 8 as a third output signal.

Here, the first magnetic sensor 3 and the second magnetic sensor 4 are arranged on the same line in the rotation direction of the rotor 12 (the circumferential direction). For example, the first magnetic sensor 3 and the second magnetic sensor 4 are arranged at positions M1 facing each other at the substantial middle in the axis direction on the inner peripheral surface of the rotor 12. On the other hand, the third magnetic sensor 5 is arranged at a position M2 deviated from the line on which the first magnetic sensor 3 and the second magnetic sensor 4 are arranged. For example, the third magnetic sensor 5 is arranged in the axis direction of the first magnetic sensor 3 or the second magnetic sensor 4. Moreover, in the embodiment, the third magnetic sensor 5 is arranged directly above the second magnetic sensor 4.

The first magnetic sensor 3, the second magnetic sensor 4, and the third magnetic sensor 5 are accommodated inside a sensor case 20.

(Power supply part)

Returning to FIG. 1, the power supply part 6 can use a secondary battery such as a nickel hydrogen battery or a lithium ion battery. In addition, the power supply part 6 can also use an electric double layer capacitor (condenser) instead of the secondary battery. The power supply part 6 of the embodiment is a battery arranged in the vehicle.

(Inverter)

The inverter 7 has a plurality of switching elements $SW_{UH}$ to $SW_{WL}$ ($SW_{UH}$, $SW_{UL}$, $SW_{VH}$, $SW_{VL}$, $SW_{WH}$, and $SW_{WL}$), and switching operations for switching an ON-state and an OFF-state of the switching elements are executed to thereby energize the three-phase windings 112 of the three-phase rotating electric machine 1. More specifically, the inverter 7 converts a direct current from the power supply part 6 into an alternating current by the switching operations of the plurality of switching elements $SW_{UH}$ to $SW_{WL}$, and supplies the alternating current to each of the U-phase winding 112U, the V-phase winding 112V, and the W-phase winding 112W. Thereby, the three-phase rotating electric machine 1 is driven. Moreover, in the embodiment, a case is described where the six switching elements $SW_{UH}$ to $SW_{WL}$ are n-type channel field effective transistors (FETs), but the present invention is not limited to this, and for example, the six switching elements $SW_{UH}$ to $SW_{WL}$ may also be insulated gate bipolar transistors (IGBTs) and bipolar junction transistor (BJTs).

Specifically, the switching elements $SW_{UH}$ and $SW_{UL}$ connected in series, the switching elements $SW_{VH}$ and $SW_{VL}$ connected in series, and the switching elements $SW_{WH}$ and $SW_{WL}$ connected in series are connected in parallel between a high potential (output) side of the power supply part 6 and a ground potential.

A drain terminal of the switching element $SW_{UH}$ is connected to an output terminal of the power supply part 6. A source terminal of the switching element $SW_{UL}$ is connected to a ground (GND). A connection point N1 of a source terminal of the switching element $SW_{UH}$ and a drain terminal of the switching element $SW_{UL}$ is connected to an end of the U-phase winding 112U.

A drain terminal of the switching element $SW_{VH}$ is connected to a drain terminal of the switching element $SW_{UH}$. A source terminal of the switching element $SW_{VL}$ is connected to the ground (GND). A connection point N2 of a source terminal of the switching element $SW_{VH}$ and a drain terminal of the switching element $SW_{VL}$ is connected to an end of the V-phase winding 112V.

A drain terminal of the switching element $SW_{WH}$ is connected to a drain terminal of the switching element $SW_{VH}$. A source terminal of the switching element $SW_{WL}$ is connected to the ground (GND). A connection point N3 of a source terminal of the switching element $SW_{WH}$ and a drain terminal of the switching element $SW_{WL}$ is connected to an end of the W-phase winding 112W.

In addition, each of the switching elements $SW_{UH}$ to $SW_{WL}$ has a gate terminal connected to the control part 8.

(Control part)

The control part 8 determines all energization timings for respectively energizing the U-phase winding 112U, the V-phase winding 112V, and the W-phase winding 112W based on the output signals of the first magnetic sensor 3 and the second magnetic sensor 4 (the first output signal and the second output signal). Then, the control part 8 controls the switching operations of the plurality of switching elements so as to respectively energize the U-phase winding 112U, the V-phase winding 112V, and the W-phase winding 112W at the determined energization timings of the control part 8.

Moreover, the control (hereinafter, referred to as "a start control") described above of deciding all the energization timings of the U-phase winding 112U, the V-phase winding 112V, and the W-phase winding 112W based on the first output signal and the second output signal, and energizing the U-phase winding 112U, the V-phase winding 112V, and the W-phase winding 112W at the energization timings, is mainly executed when the three-phase rotating electric machine 1 is started from a stopped state. For example, a case where the three-phase rotating electric machine 1 is started is a case where swing-back is performed, a case where the three-phase rotating electric machine is rotated forward after the swing-back is performed, or the like. Moreover, the start control according to the embodiment is an example of "a first control" of the present invention.

In addition, the control part 8 identifies an absolute rotation position of the three-phase rotating electric machine 1 based on the outputs of the first magnetic sensor 3, the second magnetic sensor 4, and the third magnetic sensor 5 (the first output signal, the second output signal, and the third output signal). Moreover, the identification of the absolute rotation position of the three-phase rotating electric machine 1 is synonymous with the detection of the ignition timing (an ignition position) of the engine.
Moreover, the control part 8 may be configured by a microprocessor such as a CPU, an MPU or the like, a microcontroller such as an MCU or the like, and the like.

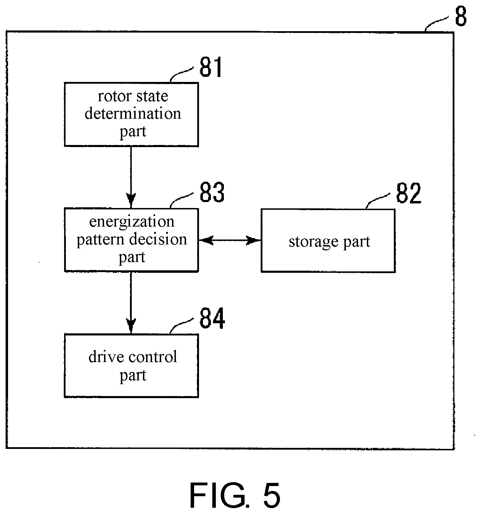

A functional block of the control part 8 according to the embodiment of the present invention is described below with reference to FIG. 5. FIG. 5 is a diagram showing the functional block according to the embodiment of the present invention.

The control part 8 includes a rotor state determination part 81, a storage part 82, an energization pattern decision part 83, and a drive control part 84.

The rotor state determination part 81 determines whether the rotor 12 is in a low-speed rotation state or in a normal rotation state. For example, when a rotation number of the rotor 12 is equal to or less than a pre-set threshold value, the rotor state determination part 81 determines that the rotor 12 is in the low-speed rotation state. Therefore, the low-speed rotation state also includes a state where the rotor 12 is stopped. On the other hand, when the rotation number of the rotor 12 exceeds the threshold value described above, the rotor state determination part 81 determines that the rotor 12 is in the normal rotation state. Moreover, the rotor state determination part 81 calculates, for example, the rotation number of the rotor 12 based on at least one or more output signals of the first output signal, the second output signal, and the third output signal.

In the storage part 82, information of four energization patterns #1 to #4 indicating the ON-state or the OFF-state of the plurality of switching elements $SW_{UH}$ to $SW_{WL}$ is accommodated. The energization patterns are switching patterns in which the switching elements $SW_{UH}$ to $SW_{WL}$ are turned into the ON-state or the OFF-state, and is a combination of any one of a state in which the switching elements $SW_{UH}$ to $SW_{WL}$ are continuously turned on ("ON"), a state in which the switching elements $SW_{UH}$ to $SW_{WL}$ are continuously turned off ("OFF") (a period other than "ON" or "Pulse Width Modulation (PWM)"), or a state in which the switching elements $SW_{UH}$ to $SW_{WL}$ are controlled ON or OFF at a prescribed period (a PWM controlled state) ("PWM").

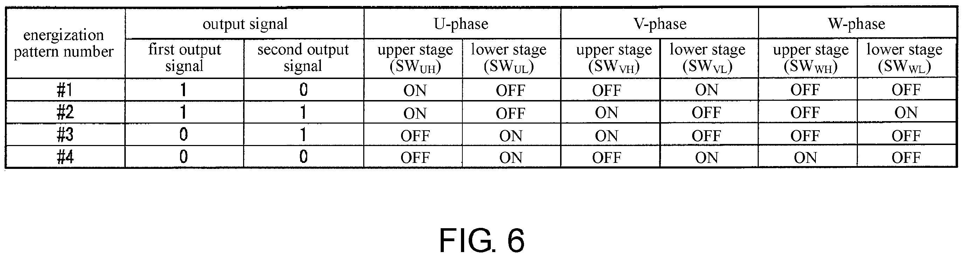

FIG. 6 is a diagram showing, in a table format, an example of the information of the four energization patterns #1 to #4 accommodated in the storage part 82 according to the embodiment of the present invention.
The four energization patterns #1 to #4 are determined by a combination of the logical values of each of the first output signal and the second output signal. Moreover, a case where the logical value is "1" is a case where a signal level is a level Hi. On the other hand, a case where the logical value is "0" is a case where the signal level is a level Low.

For example, the energization pattern #1 is an energization pattern in which the logical value of the first output signal is "1" and the logical value of the second output signal is "0" and is an energization pattern in which the switching element $SW_{UH}$ and the switching element $SW_{VL}$ are controlled in the ON-state, and the switching element $SW_{UL}$, the switching element $SW_{VH}$, the switching element $SW_{WH}$, and the switching element $SW_{WL}$ are controlled in the OFF-state.

For example, the energization pattern #2 is an energization pattern in which the logical values of the first output signal and the second output signal are both "1" and is an energization pattern in which the switching element $SW_{UH}$, the switching element $SW_{VH}$ and the switching element $SW_{WH}$ are controlled in the ON-state, and the switching element $SW_{UL}$, the switching element $SW_{VL}$, and the switching element $SW_{WH}$ are controlled in the OFF-state.

For example, the energization pattern #3 is an energization pattern in which the logical value of the first output signal is "0" and the logical value of the second output signal is "1" and is an energization pattern in which the switching element $SW_{UL}$ and the switching element

$SW_{VH}$ are controlled in the ON-state, and the switching element $SW_{UH}$, the switching element $SW_{VL}$, the switching element $SW_{WH}$, and the switching element $SW_{WL}$ are controlled in the OFF-state.

For example, the energization pattern #4 is an energization pattern in which the logical values of the first output signal and the second output signal are both "0" and is an energization pattern in which the switching element $SW_{UL}$, the switching element $SW_{VL}$, and the switching element $SW_{WH}$ are controlled in the ON-state, and the switching element $SW_{UH}$, the switching element $SW_{VH}$, and the switching element $SW_{WH}$ are controlled in the OFF-state.

In this way, among the energization patterns #1 to #4, the energization patterns #2 and #4, in which the logical value of the first output signal and the logical value of the second output signal are the same, are the energization patterns in which all the windings of the U-phase winding 112U, the V-phase winding 112V, and the W-phase winding 112W are energized (hereinafter, referred to as "the first energization pattern"). On the other hand, the energization patterns #1 and #3, in which the logical value of the first output signal and the logical value of the second output signal are different, are the energization patterns in which the U-phase winding 112U and the V-phase winding 112V are energized and the W-phase winding 112W is not energized (hereinafter, referred to as "the second energization pattern").

The energization pattern decision part 83 obtains the first output signal from the first magnetic sensor 3. In addition, the energization pattern decision part 83 obtains the second output signal from the second magnetic sensor 4. Then, when the rotor state determination part 81 determines that the rotor 12 is in the low-speed rotation state, the energization pattern decision part 83 determines, by selecting from the storage part 82, the energization pattern corresponding to the logical value of the first output signal obtained from the first magnetic sensor 3 and the logical value of the second output signal obtained from the second magnetic sensor 4.

The drive control part 84 controls the switching operations of the plurality of switching elements $SW_{UH}$ to $SW_{WL}$ based on the energization pattern determined by the energization pattern decision part 83. Specifically, the drive control part 84 controls the switching operations of the plurality of switching elements $SW_{UH}$ to $SW_{WL}$ with the energization pattern determined by the energization pattern decision part 83.

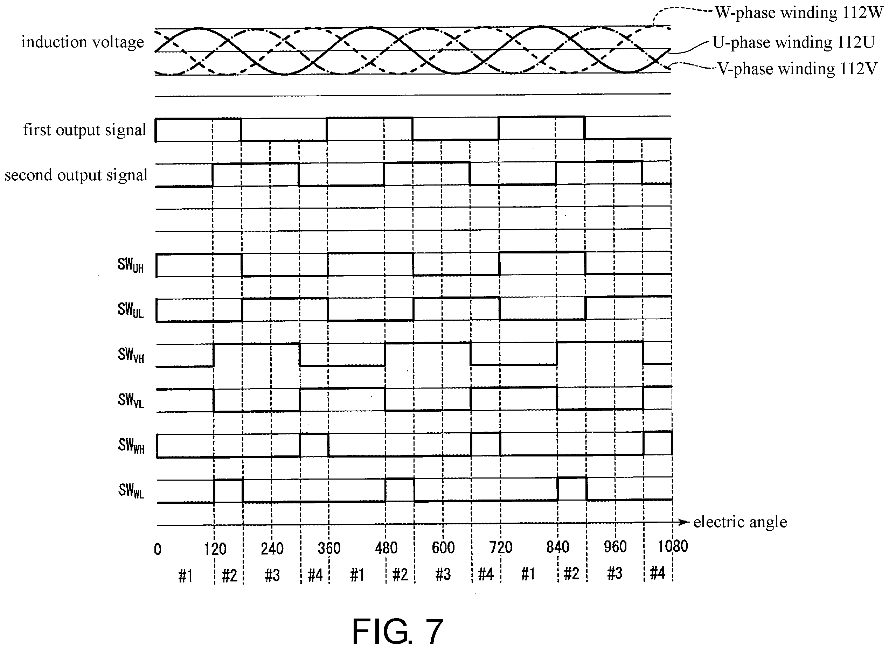

An example of a flow of an operation of the start control according to the embodiment of the present invention is described below with reference to FIG. 7. FIG. 7 is a timing chart of the start control according to the embodiment of the present invention.

For example, the control part 8 executes the start control on the three-phase rotating electric machine 1 when the three-phase rotating electric machine 1 is controlled to swing back. Here, the swing-back control refers to, for example, reversely driving the three-phase rotating electric machine 1 immediately after the engine is stopped and securing an approach distance to a compression top dead center, thereby realizing reduction in a starting torque.

First, when the control part 8 begins the start control, the rotor state determination part 81 determines whether the rotor 12 is stopped. Then, when the rotor state determination part 81 determines that the rotor 12 is stopped, the control part 8 obtains the first output signal from the first magnetic sensor 3 and obtains the second output signal from the second magnetic sensor 4.

Then, the energization pattern decision part 83 of the control part 8 determines, by selecting from the storage part 82, the energization pattern corresponding to the logical value of the first output signal obtained from the first magnetic sensor 3 and the logical value of the second output signal obtained from the second magnetic sensor 4.

For example, when the logical value of the first output signal is "1", and the logical value of the second output signal is "0", the energization pattern decision part 83 selects the energization pattern #1 as the energization pattern for executing the start control, and reads the information of the energization pattern #1 from the storage part 82. Then, based on the energization pattern #1 determined by the energization pattern decision part 83, the drive control part 84 controls the switching element $SW_{UH}$ and the switching element $SW_{VL}$ in the ON-state and controls the switching element $SW_{UL}$, the switching element $SW_{VH}$, the switching element $SW_{WH}$, and the switching element $SW_{WL}$ in the OFF-state among the plurality of switching elements $SW_{UH}$ to $SW_{WL}$.

As shown in FIG. 7, the control part 8 executes the start control for every predetermined time until the crankshaft reaches the compression top dead center. Thereby, the three-phase rotating electric machine 1 swings back until the crankshaft reaches the compression top dead center.

The control part 8 stops the start control when the crankshaft reaches the compression top dead center. Then, when the engine is started, for example, the control part 8 rotates the rotor 12 forward by executing the start control for the specified time when the engine is started from an idling stop state. Then, the control part 8 shifts to a normal control instead of the start control after the specified time elapses from a beginning of the forward rotation of the rotor 12. Here, the normal control is a control of driving the rotor 12 to rotate forward by estimating the energization timing of the W-phase based on the first output signal and the second output signal. The normal control according to the embodiment is an example of "the second control" of the present invention.

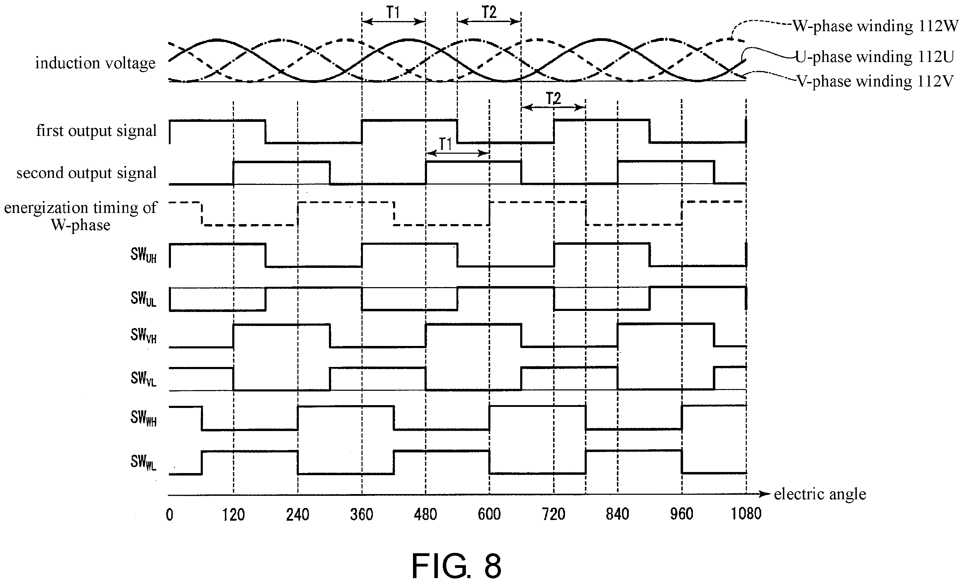

The normal control according to the embodiment of the present invention is described below with reference to FIG. 8.

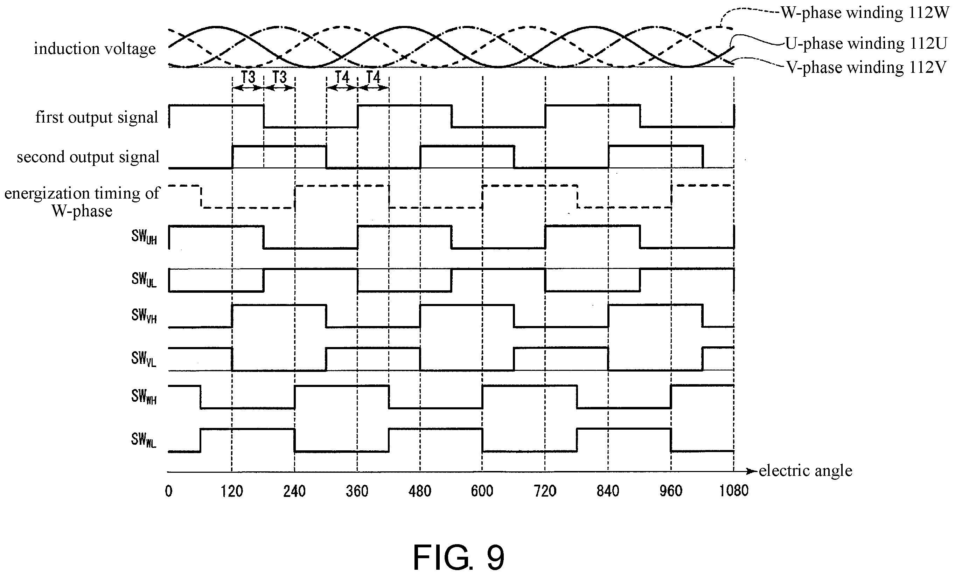

For example, when the first output signal shows the energization timing of the U-phase and the second output signal shows the energization timing of the V-phase, as shown in FIG. 8, the control part 8 measures a time T1 from a rising timing of the first output signal to a rising timing of the second output signal, and estimates the energization timing of the W-phase according to the time T1. That is, the control part 8 sets a timing at which the time T1 has elapsed from a rise of the second output signal as the energization timing of the W-phase. Moreover, when estimating a timing for stopping the energization of the W-phase, the control part 8 measures, in the same way, a time T2 from a falling timing of the first output signal to a falling timing of the second output signal, and infers the timing for stopping the energization of the W-phase according to the time T2. That is, the control part 8 sets a timing at which the time T2 has elapsed from a fall of the second output signal as the timing for stopping the energization of the W-phase. However, in the energization control according to the embodiment of the present invention, the method for estimating the energization timing of the W-phase is not limited to the inference method shown in FIG. 8, and may be, for example, an inference method shown in FIG. 9.

For example, as shown in FIG. 9, the control part 8 measures a time T3 from the rising timing of the second output signal to the falling timing of the first output signal and estimates the energization timing of the W-phase according to the time T3. That is, the control part 8 sets a timing at which the time T3 has elapsed from a fall of the first output signal as the energization timing of the W-phase. Moreover, when estimating the timing for stopping the energization of the W-phase, the control part 8 measures a time T4 from the falling timing of the second output signal to the rising timing of the first output signal, and infers the timing for stopping the energization of the W-phase according to the time T4. That is, the control part 8 sets a timing at which the time T4 has elapsed from a rise of the first output signal as the timing for stopping the energization of the W-phase.

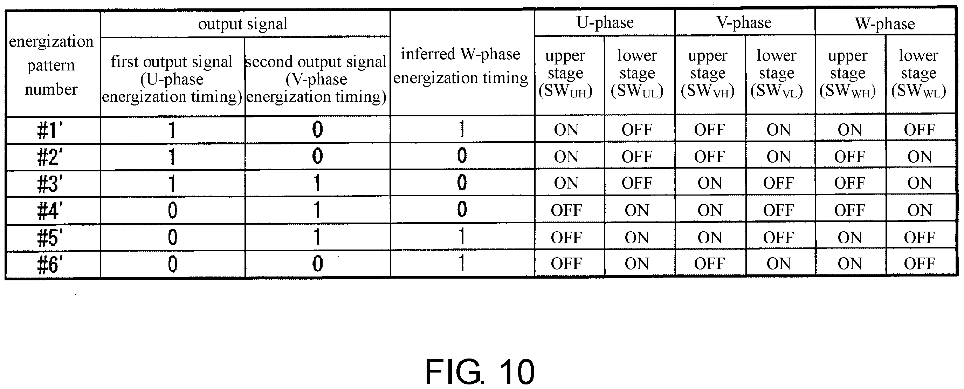

In this way, the control part 8 can switch, as the control of the switching operations of the plurality of switching elements $SW_{UH}$ to $SW_{WL}$, the start control and the normal control which is different from the start control. Besides, the normal control determines the energization timings of the U-phase and the V-phase, and estimates the energization timing of the W-phase based on the outputs of the first magnetic sensor 3 and the second magnetic sensor 4, and thereby the normal control makes the plurality of switching elements $SW_{UH}$ to $SW_{WL}$ perform the switching operations using six energization patterns #'1 to #'6 (for example, FIG. 10) indicating the ON-state or the OFF-state of the plurality of switching elements $SW_{UH}$ to $SW_{WL}$.

The embodiment of the present invention is described above in detail with reference to the drawings, but the specific configuration is not limited to the embodiment, and designs and the like within a range not deviating from the gist of the present invention are also included.

(Variation example 1)

In the embodiment, the control part 8 begins the start control of the forward rotation or the reverse rotation from the stopped state of the rotor 12, and shifts to the normal control when the specified time elapses after the start control is begun, but the present invention is not limited hereto. For example, the control part 8 may include a rotation number detection part which detects a rotation number of the rotor 12 after the start control is begun, and switch from the start control to the normal control when the rotation number reaches a specified value. As a specific example, a rising edge count number of the first output signal or the second output signal may be measured after the start control is begun, and the start control may be shifted to the normal control when the measured edge count number reaches the specified number. Moreover, the edge count number may be a falling edge count number of the first output signal or the second output signal.

(Variation example 2)

In the embodiment, the control part 8 begins the start control of the forward rotation or the reverse rotation from the stopped state of the rotor 12, and shifts to the normal control when the specified time elapses after the start control is begun, but the present invention is not limited hereto. For example, the control part 8 may include a rotation speed detection part which detects a rotation speed of the rotor 12 after the start control is begun, and may switch from the start control to the normal control when the rotation speed reaches a specified value. As a specific example, a time between two predetermined rising edges of the first output signal or the second output signal may be measured after the start control is begun, and the start control may be shifted to the normal control when the measured time is equal to or less than a specified value, that is, the rotation speed is equal to or greater than the specified value. Moreover, the edge count number may be the falling edge count number of the first output signal or the second output signal.

(Variation example 3)

In the embodiment, the control part 8 begins the start control of the forward rotation or the reverse rotation from the stopped state of the rotor 12, and shifts to the normal control when the specified time elapses after the start control is begun, but the present invention is not limited hereto. For example, the control part 8 may perform the start control when the rotor 12 is rotated reversely from the stopped state of the rotor 12, and may perform the normal control when the rotor 12 is rotated forward from the stopped state of the rotor 12. For example, the control part 8 may rotate the rotor 12 reversely by the start control when the swing-back control is performed, and may rotate the rotor 12 forward by the normal control when the rotor 12 is started from the idling stop state. Moreover, a rotor stop position after the swing-back control is set in advance so as to stop at the predetermined position. That is, in the swing-back control, the control part 8 may also rotate the rotor 12 reversely to the predetermined position by the start control.

(Variation example 4)

In the embodiment, the control part 8 begins the start control of the forward rotation or the reverse rotation from the stopped state of the rotor 12, and shifts to the normal control when the specified time elapses after the start control is begun, but the present invention is not limited hereto. For example, the control part 8 may begin the start control of the forward rotation or the reverse rotation from the stopped state of the rotor 12, and may shift to the normal control when an ignition signal is received (= when the compression top dead center is exceeded = when a first explosion occurs). In this way, the control part 8 may execute the start control when the three-phase rotating electric machine 1 is rotated forward or reversely from the stopped state, and may switch from the start control to the normal control when the crankshaft of the engine (the internal combustion engine) connected to the three-phase rotating electric machine 1 exceeds the compression top dead center.

(Variation example 5)

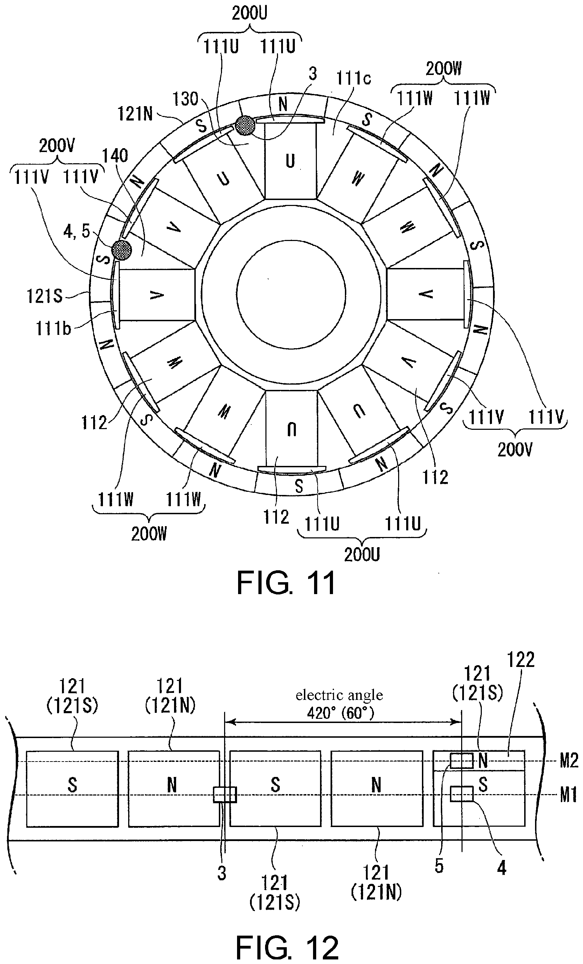

In the embodiment, the case where the three-phase rotating electric machine 1 has the twelve poles and the eighteen slots are described, but the present invention is not limited hereto, and for example, the three-phase rotating electric machine 1 may also have fourteen poles and twelve slots as shown in FIG. 11. Accordingly, when the three-phase rotating electric machine 1 has the fourteen poles and the twelve slots, compared with the case where the three-phase rotating electric machine 1 has the twelve poles and the eighteen slots, an effect of a size reduction due to reducing one magnetic sensor (for example, the magnetic sensor of the W-phase) is larger.

In this case, as shown in FIG. 12, the second magnetic sensor 4 which is the magnetic sensor of the V-phase may be arranged at an interval of an electric angle of 60° by using the first magnetic sensor 3 which is the magnetic sensor of the U-phase as a standard, and the control part 8 may execute the start control after the second output signal is rotated reversely.

Here, a schematic configuration of the three-phase rotating electric machine 1 in the case where the three-phase rotating electric machine 1 has the fourteen poles and the twelve slots is described.

For example, when n is a natural number of 3 or greater, the number of the teeth part 111b of the three-phase rotating electric machine 1 is set as T, and a pole number of the magnetic pole is set as P, if n is an odd number, the number T of the teeth part 111b and the pole number P are set so as to satisfy:
P :

$$T = 3n \pm 1 : 3n \cdots (1).$$

In addition, when n is an even number, the number T of the teeth part 111b and the pole number P are set so as to satisfy:
P :

$$T = 3n \pm 2 : 3n \cdots (2)$$

In the three-phase rotating electric machine 1 (having the fourteen poles and the twelve slots) according to the variation example, the number T of the teeth part 111b is set to 12, and the pole number P is set to 14. Therefore, if T = 12 and P = 14 are substituted into the Equation (2), and n = 4 (the even number) is further set,
$14 : 12 = 3 \times 4 + 2 : 3 \times 4$, and thus, Equation (2) is satisfied.

In addition, each of the teeth parts 111b is assigned to the three-phases (the U-phase, the V-phase, and the W-phase). Besides,
[Condition 1] When n is an even number, and when m is a natural number of 1 or greater, and the number T of the teeth part 111b and the pole number P are both m times, among the three-phases (the U-phase, the V-phase, and the W-phase), n/2 of the in-phase teeth parts 111b are arranged adjacent to each other (side by side) in the circumferential direction, and 2m in-phase teeth groups 200U, 200V, and 200W are formed. Then, the in-phase teeth groups 200U, 200V, and 200W having the same phase are respectively arranged facing each other using the rotation axis as the center.
More preferably,
[Condition 2] When n is an odd number, the teeth parts 111b are arranged in a manner that all of the in-phase teeth parts 111b among the three-phases (the U-phase, the V-phase, and the W-phase) are adjacent to each other (side by side) in the circumferential direction.

In the variation example, n = 4. Therefore, a method of an assignment of the phases of the teeth parts 111b in the case where n is the even number is described in detail below.
That is, the teeth parts 111b are assigned in an order of the U-phase, the U-phase, the V-phase, the V-phase, the W-phase, the W-phase, the U-phase, the U-phase, the V-phase, the V-phase, the W-phase, and the W-phase, in the circumferential direction.

Here, the twelve teeth parts 111b have two U-phase teeth groups 200U consisting of two U-phase teeth parts 111U, two V-phase teeth groups 200V consisting of two V-phase teeth parts 111V, and two W-phase teeth groups 200W consisting of two W-phase teeth parts 111W. That is, one phase teeth group 200U is formed by two in-phase teeth parts 111U arranged side by side in the circumferential direction, one in-phase teeth group 200V is formed by two in-phase teeth parts 111V arranged side by side in the circumferential direction, and one phase teeth group 200W is formed by two in-phase teeth parts 111W arranged side by side in the circumferential direction.

According to the [Condition 1], because n = 4, 4 / 2 = 2 the in-phase teeth parts 111b are arranged side by side in the circumferential direction. Therefore, the variation example satisfies the [Condition 1].

In addition, two in-phase teeth groups 200U, 200V, and 200W are formed respectively. If m = 1, 2 × 1 = 2. In addition, the number T of the teeth part 111b and the pole number P are m times (one time) respectively. Therefore, the variation example satisfies the [Condition 1].

Furthermore, each of the two phase teeth groups 200U, 200V, and 200W are respectively arranged opposite to each other with respect to the rotation axis as the center. Therefore, the variation example satisfies the [Condition 1].

With this configuration, when the rotor 12 rotates via the crankshaft (not shown), an amount of the magnetic flux passing through the teeth parts 111b changes. The change in the amount of the magnetic flux becomes an electromotive force and a current is generated in the three-phase windings. The current generated in the three-phase windings is used for an application of storing energy in a battery (not shown), or supplying electric power to an accessory electric apparatus (not shown).

On the other hand, when the engine (not shown) is started, the current stored in the battery is supplied to the three-phase windings. At this time, the current is selectively supplied to the winding of a predetermined phase wound around each teeth part 1 1 1b. Then, the magnetic flux is sequentially formed in the teeth parts 111b of each phase. Then, a magnetic attraction force or a magnetic repulsive force is generated between the magnetic flux and the magnets 121 arranged in the rotor 12, and the rotor 12 rotates. Furthermore, the crankshaft (not shown) is rotated via the rotor 12, and the engine is started.

Moreover, with respect to the three-phase rotating electric machine 1 in the variation example, the case is described where the magnetic pole number P is set to "14", the number T of the teeth part 111b is set to "12", and n = 4, and the above Equation (2) and [Condition 1] are satisfied. However, the present invention is not limited hereto, and the three-phase rotating electric machine 1 in the variation example 5 may be set so as to satisfy either the above Equation (1) or the aforementioned Equation (2), and satisfy either the [Condition 1] or the [Condition 2]. That is, the teeth parts 111b may be arranged to have the same phase with at least one of the adjacent teeth parts 111b.

In this way, the three-phase rotating electric machine 1 may be a three-phase rotating electric machine for starting electric generator which includes the stator in which the plurality of teeth parts are arranged adjacent to each other in the circumferential direction, and the rotor which is arranged rotatably with respect to the stator and has the plurality of magnetic poles arranged in the circumferential direction. Besides, when n is a natural number of 3 or greater, the number of the teeth parts is T, and the pole number of the magnetic poles is P, the number T of the teeth parts and the pole number P are set so as to satisfy P:T = 3n ± 1:3n when n is an odd number, and the number T of the teeth part and the pole number P are set so as to satisfy P:T = 3n ± 2:3n when n is an even number. In addition, the plurality of teeth parts include a plurality of first teeth (the U-phase teeth parts) in which first-phase coils are wound, a plurality of second teeth (the V-phase teeth parts) in which second-phase coils are wound, and a plurality of third teeth (the W-phase teeth parts) in which third-phase coils are wound; and all of the plurality of teeth parts may be arranged so as to have the same phase as that of at least one of adjacent teeth parts.

In addition, in the three-phase rotating electric machine 1 described above, when n is an odd number, all of the in-phase teeth parts may be arranged adjacent to each other in the circumferential direction.

In addition, in the three-phase rotating electric machine 1 described above, when n is an even number, m is a natural number of 1 or greater, and the number T of the teeth parts and the pole number P are both m times, 2m in-phase teeth groups may be formed in which n/2 of the in-phase teeth parts are arranged adjacent to each other in the circumferential direction, and the 2m in-phase teeth groups may be arranged facing each other using the rotation axis as the center.

(Variation example 6)

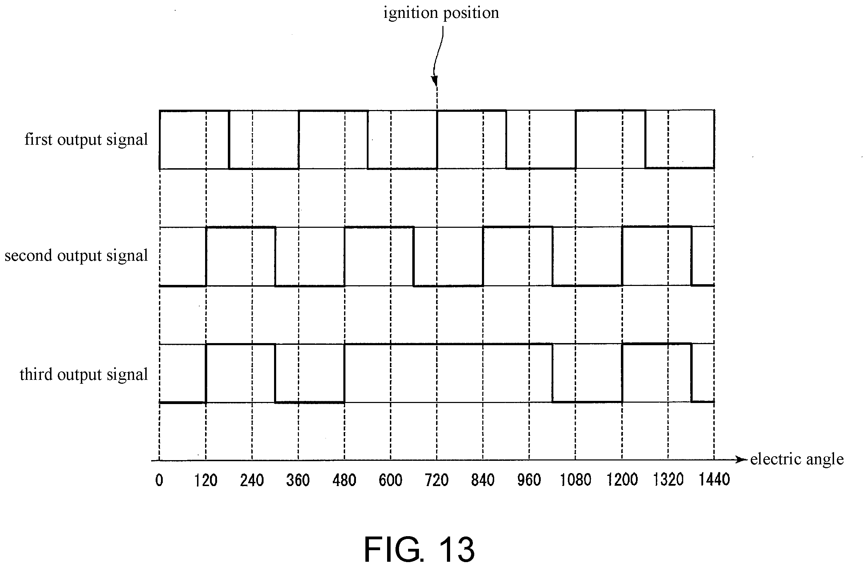

Moreover, as a method for detecting the ignition position (the absolute rotation position) according to the embodiment, for example, as shown in FIG. 13, the control part 8 may set the rising timing of the first output signal as the ignition position when the third output signal is at the level Hi,.

(Variation example 7)

In the embodiment, the different pole part 122 is arranged in the S-pole magnet 121S, but the present invention is not limited hereto, and the different pole part 122 may be arranged in a magnet having a polarity different from that of the magnetic pole of the different pole part 122. In addition, if the different pole part 122 is arranged in the magnet having the polarity different from that of the magnetic pole of the different pole part 122, for example, a metal such as iron or the like, or a cavity may be formed.

As described above, the drive device 2 of the three-phase rotating electric machine 1 according to the embodiment of the present invention includes the control part 8 which determines all the energization timings for energizing each of the windings of the U-phase, the V-phase, and the W-phase based on the outputs of the first magnetic sensor 3 and the second magnetic sensor 4 (the first output signal and the second output signal).

According to this configuration, the energization timings for energizing each of the windings of the U-phase, the V-phase, and the W-phase can be determined by the two magnetic sensors, and it is not necessary to use the three magnetic sensors as in the conventional case. That is, in the embodiment, one magnetic sensor (for example, the magnetic sensor of the W-phase) can be reduced in comparison with the conventional case.

In addition, the control part 8 may include the four energization patterns indicating the ON-state or the OFF-state of the plurality of switching elements $SW_{UH}$ to $SW_{WL}$, and may use the four energization patterns to control the energization timing of each of the windings of the U-phase, the V-phase, and the W-phase in the three-phase windings.

Here, each of the four energization patterns is determined by the combination of each output of the two magnetic sensors (the first magnetic sensor 3 and the second magnetic sensor 4). Then, the control part 8 selects the first energization pattern when the logic of each output of the two magnetic sensors is the same, selects the second energization pattern when the logic of each output of the two magnetic sensors is different, and performs the switching operations with the selected energization pattern.

According to this configuration, the rotor 12 can be rotated in a desired direction when the rotor 12 is started from the stopped state.

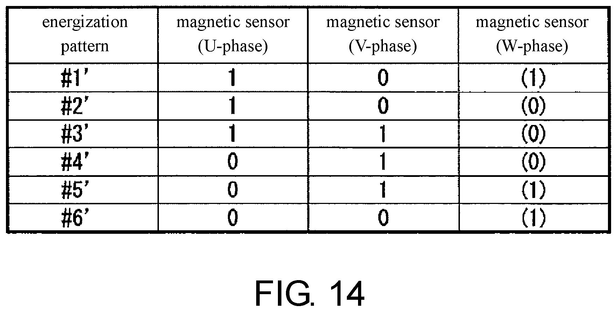

For example, as shown in FIG. 14, a conventional drive device for three-phase rotating electric machine drives the rotating electric machine to rotate with six energization patterns #1' to #6' by using the three magnetic sensors of the U-phase, the V-phase, and the W-phase. However, if the magnetic sensor of the W-phase is reduced, determination between the energization pattern #1' and the energization pattern #2' and determination between the energization pattern #4' and the energization pattern #5' are impossible to be performed, and the three-phase rotating electric machine cannot be driven. Therefore, in this case, it is considered that when the rotor 12 is started from the stopped state, an arbitrary energization pattern is selected from the six energization patterns #1' to #6' for energizing, and if the drive fails, another energization pattern is selected for re-energizing. However, in this method, one appropriate energization pattern is selected from a plurality of candidates, and thus the rotor 12 may not be started in the desired direction. In addition, when the control is performed for selecting from other energization pattern candidates in the case where the start of the rotor 12 fails, it takes a long time to start the rotor 12.

In the embodiment, the rotation drive is performed with the four energization patterns which can be respectively identified by the combination of each output of the two magnetic sensors (the first magnetic sensor 3 and the second magnetic sensor 4), and therefore even when the magnetic sensor of the W-phase is reduced, the rotor 12 can be rotated in the desired direction without the failure of the rotation drive of the rotor 12.

In addition, in the conventional drive device, it is necessary to arrange the three magnetic sensors side by side with an offset electric angle of 120° in the circumferential direction of the rotor. On the other hand, according to the configuration of the embodiment, the magnetic sensor (the third magnetic sensor 5) for the ignition signal is independently used for the control, and therefore the magnetic sensors of the U-phase and the V-phase (the first magnetic sensor 3 and the second magnetic sensor 4) may be arranged at the interval of 120°. Therefore, the drive device can be achieved with two sensor bases (sensor legs) by arranging the magnetic sensor for the ignition signal and the magnetic sensor of the U-phase or the V-phase side by side in the axis direction. Thereby, the sensor case can be miniaturized in size, which contributes to cost reduction.

[Reference Signs List]

| A | three-phase rotating electric machine unit |
|---|---|
| 1 | three-phase rotating electric machine |
| 2 | drive device |
| 3 | first magnetic sensor |
| 4 | second magnetic sensor |
| 5 | third magnetic sensor |
| 6 | power supply part |
| 7 | inverter |
| 8 | control part |
| 111c | slot |
| 121 | magnet |
| 122 | different pole part |
| $SW_{UH}$-$SW_{WL}$ | switching element |

**Claims**

1. A drive device (2) for a three-phase rotating electric machine (1) mounted on a vehicle, the drive device (2) comprising:

a power supply part (6);
a plurality of switching elements ($SW_{UH}$~$SW_{WL}$) which energize three-phase windings (112U, 112V, 112W) of the three-phase rotating electric machine (1) by performing switching operations for each of three-phase windings; and
a control part (8) which controls the switching operations of the plurality of switching elements (SW$_{UH}$~SW$_{WL}$),

wherein the control part (8) performs a first control for controlling the switching operations using four energization patterns indicating an ON-state or an OFF-state of the plurality of switching elements (SW$_{UH}$~SW$_{WL}$), thereby driving the three-phase rotating electric machine (1),

in the first control, the control part uses the four energization patterns to control an energization timing of each of a U-phase winding, a V-phase winding and a W-phase winding in the three-phase windings,

among the plurality of switching elements, an upper-stage switch and a lower-stage connected in series for energizing the U-phase winding, an upper-stage switch and a lower-stage switch connected in series for energizing the V-phase winding, and an upper-stage switch and a lower-stage switch connected in series for energizing the V-phase winding are connected in parallel between an output side of the power supply part and a ground potential; the drive device (2) being **characterized in that**

in each of the four energization patterns, one of the upper-stage switch and the lower-stage for the U-phase winding and the V-phase winding are configured to be turned on so as to energize the U-phase winding and the V-phase winding, and one of the upper-stage switch and the lower-stage for the W-phase winding is configured to be turn on so as to energize the W-phase winding or both of the upper-stage switch and the lower-stage for the W-phase winding are configured to be turn off so as not to energize the W-phase winding.

2. The drive device (2) for a three-phase rotating electric machine according (1) to claim 1, **characterized in** comprising two magnetic sensors (3, 4) for detecting magnetic flux of a plurality of magnets (121) having N poles (121N) and S poles (121S), wherein the N poles and the S poles are alternately arranged in a circumferential direction of a rotor (12) of the three-phase rotating electric machine (1), and
each of the four energization patterns is determined by a combination of each output of the two magnetic sensors (3, 4).

3. The drive device (2) for a three-phase rotating electric machine (1) according to claim 2, **characterized in that** the control part (8) selects the first energization pattern in case that logic of each output of the two magnetic sensors (3, 4) is the same, and selects the second energization pattern in a case that the logic of each output of the two magnetic sensors (3, 4) is different.

4. The drive device (2) for a three-phase rotating electric machine (1) according to claim 2 or 3, **characterized in that** the control part (8) is capable of switching, as controls of the switching operations, the first control and a second control which is different from the first control, wherein
the second control determines the energization timings of the U-phase and the V-phase and estimates the energization timing of the W-phase based on the outputs of the two magnetic sensors (3, 4), and thereby the second control makes the plurality of switching elements (SW$_{UH}$~SW$_{WL}$) perform the switching operations with six energization patterns indicating the ON-state or the OFF-state of the plurality of switching elements (SW$_{UH}$~SW$_{WL}$).

5. The drive device (2) for a three-phase rotating electric machine (1) according to claim 4, **characterized in that** the control part (8) executes the first control for a specified time when the three-phase rotating electric machine (1) is started so as to rotate the three-phase rotating electric machine (1) forward, and switches from the first control to the second control after the specified time elapses.

6. The drive device (2) for a three-phase rotating electric machine (1) according to claim 4, **characterized in that** the control part (8) comprises a rotation number detection part which detects a rotation number of the three-phase rotating electric machine (1) after the first control is begun, and switches from the first control to the second control when the rotation number detected by the rotation number detection part reaches a specified value.

7. The drive device (2) for a three-phase rotating electric machine (1) according to claim 4, **characterized in that** the control part (8) comprises a rotation speed detection part which detects a rotation speed of the three-phase rotating electric machine after the first control is begun, and switches from the first control to the second control when the rotation speed detected by the rotation speed detection part reaches a specified value.

8. The drive device (2) for a three-phase rotating electric machine (1) according to claim 4, **characterized in that** the control part (8) executes the first control when the three-phase rotating electric machine is rotated reversely from a stopped state, and executes the second control when the three-phase rotating electric machine is rotated forward from the stopped state.

9. The drive device (2) for a three-phase rotating electric machine (1) according to claim 4, **characterized in that** the control part (8) executes the first control when the three-phase rotating electric machine (1) is rotated reversely or forward from the stopped state, and switches from the first control to the second control when a crankshaft of an internal combustion engine connected to the three-phase rotating electric machine (1) exceeds a compression top dead center.

10. The drive device (2) for a three-phase rotating electric machine according to any one of claims 1-9, , wherein
the three-phase rotating electric machine (1) comprises:

a stator (11) having a plurality of core teeth (111b) and a plurality of slots (111c) in which three-phase windings are wound between the adjacent core teeth (111b);
a rotor (12) having a plurality of magnets (121) in which N poles (121N) and S poles (121S) are magnetized alternately; and
a different pole part (122) which is arranged in a magnet (121) among the plurality of magnets (121) and has a magnetic pole different from a magnetic pole of the magnet, and
the drive device (2) comprises:

a first magnetic sensor (3) arranged in a first slot (130) among the plurality of slots (1 1 1c);
a second magnetic sensor (4) arranged in a second slot (140) which is different from the first slot (130) among the plurality of slots (111c); and
a third magnetic sensor (5) arranged in the first slot (130) or the second slot (140) and arranged in a position corresponding to the different pole part (122),
wherein the control part determines all energization timings for energizing each of the U-phase winding, the V-phase winding, and the W-phase winding based on outputs of the first magnetic sensor and the second magnetic sensor, and identifies an absolute rotation position of the three-phase rotating electric machine based on outputs of the first magnetic sensor, the second magnetic sensor, and the third magnetic sensor.

11. The drive device (2) for a three-phase rotating electric machine according to claim 10, **characterized in that** the third magnetic sensor (5) is arranged in a rotation axis direction of the rotor from a position of the first magnetic sensor (3) or a position of the second magnetic sensor (4).

**Patentansprüche**

1. Antriebsvorrichtung (2) für eine dreiphasige rotierende elektrische Maschine (1), die an einem Fahrzeug montiert ist, wobei die Antriebsvorrichtung (2) umfasst:

ein Stromversorgungsteil (6);
eine Vielzahl von Schaltelementen ($SW_{UH}$ ~$SW_{WL}$), die dreiphasige Wicklungen (112U, 112V, 112W) der dreiphasigen rotierenden elektrischen Maschine (1) erregen, indem sie Schaltvorgänge für jede der dreiphasigen Wicklungen durchführen; und
ein Steuerteil (8), das die Schaltvorgänge der Vielzahl von Schaltelementen ($SW_{UH}$ ~$SW_{WL}$) steuert,
wobei das Steuerteil (8) eine erste Steuerung zum Steuern der Schaltvorgänge unter Verwendung von vier Erregungsmustern durchführt, die einen EIN-Zustand oder einen AUS-Zustand der Vielzahl von Schaltelementen ($SW_{UH}$ ~$SW_{WL}$) anzeigen, wodurch die dreiphasige rotierende elektrische Maschine (1) angetrieben wird,
bei der ersten Steuerung, das Steuerteil die vier Erregungsmuster verwendet, um einen Erregungszeitpunkt jeder U-Phasen-Wicklung, einer V-Phasen-Wicklung und einer W-Phasen-Wicklung in den dreiphasigen Wicklungen zu steuern,
unter der Vielzahl von Schaltelementen, ein Schalter der oberen Stufe und ein Schalter der unteren Stufe, die in Reihe geschaltet sind, um die U-Phasen-Wicklung zu erregen, ein Schalter der oberen Stufe und ein Schalter der unteren Stufe, die in Reihe geschaltet sind, um die V-Phasen-Wicklung zu erregen, und ein Schalter der oberen Stufe und ein Schalter der unteren Stufe, die in Reihe geschaltet sind, um die V-Phasen-Wicklung zu erregen, parallel zwischen einer Ausgangsseite des Stromversorgungsteils und einem Massepotential geschaltet sind;
wobei die Antriebsvorrichtung (2) **dadurch gekennzeichnet ist, dass**
in jedem der vier Erregungsmuster, einer von dem Schalter der oberen Stufe und der unteren Stufe für die U-Phasen-Wicklung und die V-Phasen-Wicklung konfiguriert ist, eingeschaltet zu werden, um die U-Phasen-Wicklung und die V-Phasen-Wicklung zu erregen, und einer von dem Schalter der oberen Stufe und der unteren Stufe für die W-Phasen-Wicklung konfiguriert ist, eingeschaltet zu werden, um die W-Phasen-Wicklung zu erregen, oder beide Schalter der oberen Stufe und der unteren Stufe für die W-Phasen-Wicklung konfiguriert sind, ausgeschaltet zu werden, um die W-Phasen-Wicklung nicht zu erregen.

2. Antriebsvorrichtung (2) für eine dreiphasige rotierende elektrische Maschine (1) gemäß Anspruch 1, **dadurch gekennzeichnet, dass** sie zwei Magnetsensoren (3, 4) zum Erfassen eines Magnetflusses einer Vielzahl von Magneten (121) mit N-Polen (121N) und S-Polen (121S) umfasst, wobei die N-Pole und die S-Pole abwechselnd in einer Umfangsrichtung eines Rotors (12) der dreiphasigen rotierenden elektrischen Maschine (1) angeordnet sind, und jedes der vier Erregungsmuster durch eine Kombination der Ausgänge der beiden Magnetsensoren (3, 4) bestimmt wird.

3. Antriebsvorrichtung (2) für eine dreiphasige rotierende elektrische Maschine (1) gemäß Anspruch 2, **dadurch gekennzeichnet, dass** das Steuerteil (8) das erste Erregungsmuster auswählt, in dem Fall, dass die Logik jedes Ausgangs der beiden Magnetsensoren (3, 4) gleich ist, und das zweite Erregungsmuster auswählt, in dem Fall, dass die Logik jedes Ausgangs der beiden Magnetsensoren (3, 4) unterschiedlich ist.

4. Antriebsvorrichtung (2) für eine dreiphasige rotierende elektrische Maschine (1) gemäß Anspruch 2 oder 3, **dadurch gekennzeichnet, dass** das Steuerteil (8) in der Lage ist, die erste Steuerung und eine zweite, von der ersten Steuerung verschiedene Steuerung als Steuerungen der Schaltvorgänge zu schalten, wobei die zweite Steuerung die Erregungszeitpunkte der U-Phase und der V-Phase bestimmt und den Erregungszeitpunkt der W-Phase auf der Grundlage der Ausgänge der beiden Magnetsensoren (3, 4) schätzt, und dadurch die zweite Steuerung die Vielzahl von Schaltelementen (SW$_{UH}$ ~SW$_{WL}$) veranlasst, die Schaltvorgänge mit sechs Erregungsmustern durchzuführen, die den EIN-Zustand oder den AUS-Zustand der Vielzahl von Schaltelementen (SW$_{UH}$ ~SW$_{WL}$) anzeigen.

5. Antriebsvorrichtung (2) für eine dreiphasige rotierende elektrische Maschine (1) gemäß Anspruch 4, **dadurch gekennzeichnet, dass** das Steuerteil (8) die erste Steuerung für eine bestimmte Zeit ausführt, wenn die dreiphasige rotierende elektrische Maschine (1) gestartet wird, um die dreiphasige rotierende elektrische Maschine (1) vorwärts zu drehen, und nach Ablauf der bestimmten Zeit von der ersten Steuerung zur zweiten Steuerung wechselt.

6. Antriebsvorrichtung (2) für eine dreiphasige rotierende elektrische Maschine (1) gemäß Anspruch 4, **dadurch gekennzeichnet, dass** das Steuerteil (8) ein Rotationszahlerfassungsteil umfasst, das eine Rotationszahl der dreiphasigen rotierenden elektrischen Maschine (1) erfasst, nachdem die erste Steuerung begonnen hat, und von der ersten Steuerung auf die zweite Steuerung umschaltet, wenn die von dem Rotationszahlerfassungsteil erfasste Rotationszahl einen bestimmten Wert erreicht.

7. Antriebsvorrichtung (2) für eine dreiphasige rotierende elektrische Maschine (1) gemäß Anspruch 4, **dadurch gekennzeichnet, dass** das Steuerteil (8) ein Drehgeschwindigkeits-Erfassungsteil umfasst, das eine Drehgeschwindigkeit der dreiphasigen rotierenden elektrischen Maschine erfasst, nachdem die erste Steuerung begonnen hat, und von der ersten Steuerung auf die zweite Steuerung umschaltet, wenn die vom Drehgeschwindigkeits-Erfassungsteil erfasste Drehgeschwindigkeit einen bestimmten Wert erreicht.

8. Antriebsvorrichtung (2) für eine dreiphasige rotierende elektrische Maschine (1) gemäß Anspruch 4, **dadurch gekennzeichnet, dass** das Steuerteil (8) die erste Steuerung ausführt, wenn die dreiphasige rotierende elektrische Maschine aus einem gestoppten Zustand rückwärts gedreht wird, und die zweite Steuerung ausführt, wenn die dreiphasige rotierende elektrische Maschine aus dem gestoppten Zustand vorwärts gedreht wird.

9. Antriebsvorrichtung (2) für eine dreiphasige rotierende elektrische Maschine (1) gemäß Anspruch 4, **dadurch gekennzeichnet, dass** das Steuerteil (8) die erste Steuerung ausführt, wenn die dreiphasige rotierende elektrische Maschine (1) aus dem gestoppten Zustand rückwärts oder vorwärts gedreht wird, und von der ersten Steuerung auf die zweite Steuerung umschaltet, wenn eine Kurbelwelle eines mit der dreiphasige rotierende elektrische Maschine (1) verbundenen Verbrennungsmotors einen oberen Kompressionstotpunkt überschreitet.

10. Antriebsvorrichtung (2) für eine dreiphasige rotierende elektrische Maschine (1) gemäß irgendeinem der Ansprüche 1 bis 9, wobei die dreiphasige rotierende elektrische Maschine (1) umfasst:

einen Stator (11) mit einer Vielzahl von Kernzähnen (111b) und einer Vielzahl von Schlitzen (111c), in denen Dreiphasenwicklungen zwischen den benachbarten Kernzähnen (111b) gewickelt sind; einem Rotor (12) mit einer Vielzahl von Magneten (121), bei denen N-Pole (121N) und S-Pole (121S) abwechselnd magnetisiert sind; und ein anderes Polteil (122), das in einem Magneten (121) unter der Vielzahl von Magneten (121) angeordnet ist und einen von einem Magnetpol des Magneten verschiedenen Magnetpol aufweist, und die Antriebsvorrichtung (2) umfasst:

einen ersten Magnetsensor (3), der in einem ersten Schlitz (130) aus der Vielzahl der Schlitze (111c) angeordnet ist;

einen zweiten Magnetsensor (4), der in einem zweiten Schlitz (140) angeordnet ist, der sich von dem ersten Schlitz (130) unter der Vielzahl von Schlitzen (111c) unterscheidet; und

einen dritten Magnetsensor (5), der in dem ersten Schlitz (130) oder dem zweiten Schlitz (140) und in einer Position angeordnet ist, die dem anderen Polteil (122) entspricht,

wobei das Steuerteil alle Erregungszeitpunkte für die Erregung jeder der U-Phasen-Wicklung, der V-Phasen-Wicklung und der W-Phasen-Wicklung auf der Grundlage der Ausgänge des ersten Magnetsensors und des zweiten Magnetsensors bestimmt und eine absolute Drehposition der dreiphasigen rotierenden elektrischen Maschine auf der Grundlage der Ausgänge des ersten Magnetsensors, des zweiten Magnetsensors und des dritten Magnetsensors identifiziert.

11. Antriebsvorrichtung (2) für eine dreiphasige rotierende elektrische Maschine (1) gemäß Anspruch 10, **dadurch gekennzeichnet, dass** der dritte Magnetsensor (5) in einer Drehachsenrichtung des Rotors angeordnet ist, von einer Position des ersten Magnetsensors (3) oder einer Position des zweiten Magnetsensors (4).

**Revendications**

1. Un dispositif d'entraînement (2) pour une machine électrique rotative triphasée (1) montée sur un véhicule, le dispositif d'entraînement (2) comprenant :

une partie alimentation électrique (6) ;
une pluralité d'éléments de commutation ($SW_{UH} \sim SW_{WL}$) qui alimentent des enroulements triphasés (112U, 112V, 112W) de la machine électrique rotative triphasée (1) en effectuant des opérations de commutation pour chacun des enroulements triphasés ; et
une partie de commande (8) qui commande les opérations de commutation de la pluralité d'éléments de commutation ($SW_{UH} \sim SW_{WL}$),
la partie de commande (8) effectue une première commande pour commander les opérations de commutation en utilisant quatre modèles d'excitation indiquant un état PASSANT ou un état D'ARRÊT de la pluralité d'éléments de commutation ($SW_{UH} \sim SW_{WL}$), entraînant ainsi la machine électrique rotative triphasée (1),

dans la première commande, la partie de commande utilise les quatre modèles d'excitation pour commander un timing d'excitation de chacun parmi un enroulement de phase U, un enroulement de phase V et un enroulement de phase W dans les enroulements triphasés,
parmi la pluralité d'éléments de commutation, un commutateur d'étage supérieur et un étage inférieur connectés en série pour exciter l'enroulement de phase U, un commutateur d'étage supérieur et un commutateur d'étage inférieur connectés en série pour exciter l'enroulement de phase V, et un commutateur d'étage supérieur et un commutateur d'étage inférieur connectés en série pour exciter l'enroulement de phase V sont connectés en parallèle entre un côté sortie de la partie alimentation électrique et un potentiel de masse ; le dispositif d'entraînement (2) étant **caractérisé en ce que**
dans chacun des quatre modèles d'excitation, l'un parmi le commutateur d'étage supérieur et l'étage inférieur pour l'enroulement de phase U et l'enroulement de phase V sont configurés pour être mis à l'état passant de manière à exciter l'enroulement de phase U et l'enroulement de phase V, et l'un parmi le commutateur d'étage supérieur et l'étage inférieur pour l'enroulement de phase W est configuré pour être mis à l'état passant de manière à exciter l'enroulement de phase W ou à la fois le commutateur d'étage supérieur et l'étage inférieur pour l'enroulement de phase W sont configurés pour être mis à l'état d'arrêt afin de ne pas exciter l'enroulement de phase W.

2. Le dispositif d'entraînement (2) pour une machine électrique rotative triphasée (1) selon la revendication 1, **caractérisé en ce qu'**il comprend deux capteurs magnétiques (3, 4) pour détecter le flux magnétique d'une pluralité d'aimants (121) ayant des pôles N (121N) et des pôles S (121S), les pôles N et les pôles S étant agencés en alternance dans une direction circonférentielle d'un rotor (12) de la machine électrique rotative triphasée (1), et
chacun des quatre modèles d'excitation est déterminé par une combinaison de chaque sortie des deux capteurs magnétiques (3, 4).

3. Le dispositif d'entraînement (2) pour machine électrique rotative triphasée (1) selon la revendication 2, **caractérisé en ce que** la partie de commande (8) sélectionne le premier schéma d'alimentation au cas où une logique de chaque sortie des deux capteurs magnétiques (3, 4) est la même, et sélectionne le deuxième modèle d'excitation dans le cas où la logique de chaque sortie des deux capteurs magnétiques (3, 4) est différente.

**4.** Le dispositif d'entraînement (2) pour machine électrique rotative triphasée (1) selon la revendication 2 ou 3, **caractérisé en ce que** la partie de commande (8) est apte à commuter, en tant que commandes des opérations de commutation, entre la première commande et une deuxième commande qui est différente de la première commande,
la deuxième commande détermine les timings d'excitation de la phase U et de la phase V et estime le timing d'excitation de la phase W sur la base des sorties des deux capteurs magnétiques (3, 4), et ainsi la deuxième commande amène la pluralité d'éléments de commutation (SW$_{UH}$~SW$_{WL}$) à effectuer les opérations de commutation avec six modèles d'excitation indiquant l'état PASSANT ou l'état D'ARRÊT de la pluralité d'éléments de commutation (SW$_{UH}$~SW$_{WL}$).

**5.** Le dispositif d'entraînement (2) pour une machine électrique rotative triphasée (1) selon la revendication 4, **caractérisé en ce que** la partie de commande (8) exécute la première commande pendant un temps déterminé lorsque la machine électrique rotative triphasée (1) est démarré de manière à faire tourner la machine électrique rotative triphasée (1) vers l'avant, et passe de la première commande à la deuxième commande une fois le temps spécifié écoulé.

**6.** Le dispositif d'entraînement (2) pour une machine électrique rotative triphasée (1) selon la revendication 4, **caractérisé en ce que** la partie de commande (8) comprend une partie de détection de nombre de rotations qui détecte un nombre de rotation de la machine électrique rotative triphasée (1) après le début de la première commande, et passe de la première commande à la deuxième commande lorsque le nombre de rotations détecté par la partie de détection de nombre de rotations atteint une valeur spécifiée.

**7.** Le dispositif d'entraînement (2) pour une machine électrique rotative triphasée (1) selon la revendication 4, **caractérisé en ce que** la partie de commande (8) comprend une partie de détection de vitesse de rotation qui détecte une vitesse de rotation de la machine électrique rotative triphasée après le début de la première commande, et passe de la première commande à la deuxième commande lorsque la vitesse de rotation détectée par la partie de détection de vitesse de rotation atteint une valeur spécifiée.

**8.** Le dispositif d'entraînement (2) pour une machine électrique rotative triphasée (1) selon la revendication 4, **caractérisée en ce que** la partie de commande (8) exécute la première commande lorsque la machine électrique rotative triphasée tourne en sens inverse à partir d'un état d'arrêt, et exécute la deuxième commande lorsque la machine électrique rotative triphasée tourne en sens avant à partir de l'état d'arrêt.

**9.** Le dispositif d'entraînement (2) pour une machine électrique rotative triphasée (1) selon la revendication 4, **caractérisé en ce que** la partie de commande (8) exécute la première commande lorsque la machine électrique rotative triphasée (1) est mise en rotation en sens inverse ou en sens avant depuis l'état d'arrêt, et passe de la première commande à la deuxième commande lorsqu'un vilebrequin d'un moteur à combustion interne relié à la machine électrique rotative triphasée (1) dépasse un point mort haut de compression.

**10.** Le dispositif d'entraînement (2) pour une machine électrique rotative triphasée selon l'une quelconque des revendications 1 à 9, dans lequel
la machine électrique rotative triphasée (1) comprend :

un stator (11) ayant une pluralité de dents de noyau (111b) et une pluralité de fentes (111c) dans lesquelles des enroulements triphasés sont enroulés entre les dents de noyau adjacentes (111b) ;
un rotor (12) comportant une pluralité d'aimants (121) dans lesquels des pôles N (121N) et des pôles S (121S) sont magnétisés de façon alternée ; et
une partie polaire différente (122) qui est agencée dans un aimant (121) parmi la pluralité d'aimants (121) et possède un pôle magnétique différent d'un pôle magnétique de l'aimant, et le dispositif d'entraînement (2) comprend :

un premier capteur magnétique (3) agencé dans une première fente (130) parmi la pluralité de fentes (111c) ;
un deuxième capteur magnétique (4) agencé dans une deuxième fente (140) qui est différente de la première fente (130) parmi la pluralité de fentes (111c) ; et
un troisième capteur magnétique (5) agencé dans la première fente (130) ou la deuxième fente (140) et agencé dans une position correspondant à la partie polaire différente (122),
la partie de commande détermine tous les timings d'excitation pour exciter chacun parmi l'enroulement de phase U, l'enroulement de phase V et l'enroulement de phase W sur la base des sorties du premier capteur magnétique et du deuxième capteur magnétique, et identifie une position de rotation absolue de la machine électrique rotative triphasée est basée sur les sorties du premier capteur magnétique, du deuxième capteur magnétique et du troisième capteur magnétique.

11. Le dispositif d'entraînement (2) pour machine électrique rotative triphasée selon la revendication 10, **caractérisé en ce que** le troisième capteur magnétique (5) est agencé dans une direction d'axe de rotation du rotor à partir d'une position du premier capteur magnétique (3) ou une position du deuxième capteur magnétique (4).

FIG. 1

FIG. 2

FIG. 3

FIG. 4

FIG. 5

| energization pattern number | output signal | | U-phase | | V-phase | | W-phase | |
|---|---|---|---|---|---|---|---|---|
| | first output signal | second output signal | upper stage $(SW_{UH})$ | lower stage $(SW_{UL})$ | upper stage $(SW_{VH})$ | lower stage $(SW_{VL})$ | upper stage $(SW_{WH})$ | lower stage $(SW_{WL})$ |
| #1 | 1 | 0 | ON | OFF | OFF | ON | OFF | OFF |
| #2 | 1 | 1 | ON | OFF | ON | OFF | OFF | ON |
| #3 | 0 | 1 | OFF | ON | ON | OFF | OFF | OFF |
| #4 | 0 | 0 | OFF | ON | OFF | ON | ON | OFF |

FIG. 6

EP 3 823 155 B1

FIG. 7

FIG. 8

FIG. 9

| energization pattern number | output signal | | inferred W-phase energization timing | U-phase | | V-phase | | W-phase | |
|---|---|---|---|---|---|---|---|---|---|
| | first output signal (U-phase energization timing) | second output signal (V-phase energization timing) | | upper stage (SW$_{UH}$) | lower stage (SW$_{UL}$) | upper stage (SW$_{VH}$) | lower stage (SW$_{VL}$) | upper stage (SW$_{WH}$) | lower stage (SW$_{WL}$) |
| #1' | 1 | 0 | 1 | ON | OFF | OFF | ON | ON | OFF |
| #2' | 1 | 0 | 0 | ON | OFF | OFF | ON | OFF | ON |
| #3' | 1 | 1 | 0 | ON | OFF | ON | OFF | OFF | ON |
| #4' | 0 | 1 | 0 | OFF | ON | ON | OFF | OFF | ON |
| #5' | 0 | 1 | 1 | OFF | ON | ON | OFF | ON | OFF |
| #6' | 0 | 0 | 1 | OFF | ON | OFF | ON | ON | OFF |

FIG. 10

EP 3 823 155 B1

FIG. 11

FIG. 12

FIG. 13

| energization pattern | magnetic sensor (U-phase) | magnetic sensor (V-phase) | magnetic sensor (W-phase) |
|---|---|---|---|
| #1' | 1 | 0 | (1) |
| #2' | 1 | 0 | (0) |
| #3' | 1 | 1 | (0) |
| #4' | 0 | 1 | (0) |
| #5' | 0 | 1 | (1) |
| #6' | 0 | 0 | (1) |

# FIG. 14

**EP 3 823 155 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009089588 A

- EP 2242173 A1